# EUROPEAN PATENT APPLICATION

(11) **EP 2 228 718 A1**
(43) Date of publication of application: **15.09.2010**
(21) Application number: 09003545.2
(22) Date of filing: 11.03.2009
(51) Int. Cl.: G06F 9/445, G06F 1/06

(54) **Computing device and start-up method therefor**

(60) Divisional application: 10007859.1
(71) Applicant: Harman Becker Automotive Systems GmbH, 76307 Karlsbad (DE)
(72) Inventor: Erforth, Thomas, 76185 Karlsruhe (DE); Kies, Peter, 76149 Karlsruhe (DE); Achauer, Bruno, 74374 Zaberfeld (DE); Kutzki, Arno, 75334 Straubenhardt (DE); Kraft, Günther, 76133 Karlsruhe (DE)
(74) Representative: Bertsch, Florian Oliver

(57) **Abstract**

The present invention relates to a computing device, comprising:
- a computing unit (101) comprising a working memory (104) and a processing unit (102),
- a boot memory (106) comprising control instructions for operating the computing device (100) which are to be transferred to the computing unit (101) at start-up of the computing device,

characterized by further comprising
- a boot control unit (108) interfacing the computing unit (101) by at least a first and a second interface and interfacing the boot memory (106) by a third interface,

wherein the boot control unit (108) is configured to transfer a first part of said control instructions from said boot memory (106) via said first interface to said computing unit (101) and to transfer a second part of said control instructions from said boot memory (106) via said second interface to said computing unit (101).

## Description

### Field of the Invention

The present invention relates to a computing device and to a method of operating a computing device. In particular, the invention relates to a computing device with an improved start-up performance.

### Background

Computer platforms are implemented in a range of electronic devices, such as portable electronic devices comprising portable computers, mobile internet devices, smart phones and the like. Furthermore, computing platforms are being implemented in vehicles, where they control a range of vehicle functions. In all these applications it is desirable that the computing platforms start up quickly, so that the user is faced with a minimum delay before being capable of operating the device. Particularly in automotive applications fast start-up times are required, as the vehicle functions controlled by the computing device should be available as soon as the vehicle is started. As an example, the warning sound for reversing the vehicle should become available immediately after starting the vehicle. Further, there may be special requirements regarding e.g. early audio and early video.

For the applications mentioned above a computing platform such as the Intel® Centrino® Atom™ platform using an Intel® Atom™ processor, which is also termed Menlow or Menlow XL platform, can be employed.

When starting up a computing device, a reset signal is generally supplied to the central processing unit. When a synchronous reset is used, as it is the case for the Intel® Centrino® platform, a clock signal is required for recognizing and processing the reset signal by the CPU. In conventional systems, the clock signal is generated by a so-called real-time clock (RTC), which comprises a 32 kHz quartz oscillator. Such quartz oscillators have typically an oscillation build-up time of 800 ms or more. The CPU has to wait for this period of time before being capable of processing the reset signal. If the reset signal is deactivated before a valid RTC clock signal is available to the system controller hub of the computing device, an undefined behaviour will result. Accordingly, the deactivation of the reset signal needs to be delayed until the oscillation build-up of the RTC quartz is finalized. An additional delay is thus introduced in the start-up phase of the computing device. Together with the delay caused by the initial program load (IPL) and the start-up application via the relatively slow low pin count (LPC) bus, the delay at a start-up of such a conventional computing device can no longer meet the requirements of automotive environments.

A computing system based on such a platform generally requires about two seconds for starting up, with a system application having a size of about two megabytes (MB) being loaded during the booting procedure (IPL). A duration of such a length until the computing device becomes operable is generally too long for the requirements posed by automotive applications.

### Summary

Accordingly, there is a need for improving the start-up performance of a computing device. In particular, it is desirable to reduce the time required by the computing device to become operational.

This need is met by the features of the independent claims. The dependent claims describe preferred embodiments of the invention.

According to a first aspect of the invention, a computing device comprising a computing unit and a boot memory is provided. The computing unit comprises a working memory and a processing unit. The boot memory comprises control instructions for operating the computing device which are to be transferred to the computing unit at start-up of the computing device. The computing device further comprises a boot control unit interfacing the computing unit by at least a first and a second interface and interfacing the boot memory by a third interface. The boot control unit is configured to transfer a first part of the control instructions from the boot memory via the first interface to the computing unit and to transfer a second part of the control instructions from the boot memory via the second interface to the computing unit.

By using two interfaces for transferring the control instructions from the boot memory to the computing unit, the transfer can be performed faster, and the time required for a start-up of the computing device can be reduced.

According to an embodiment of the invention, the second part of the control instructions is larger than the first part and the second interface is configured to transfer data at a faster rate than the first interface. The control instructions are for example part of a boot application which is to be transferred at start-up of the computing device. As the second part of the boot application data, which has a larger size, is transferred via the faster of the two interfaces, the initial program load requires less time, and the start-up performance is improved accordingly.

The boot control unit may comprise a direct memory access (DMA) controller for transferring the second part of the control instructions via the second interface into the working memory of the computing unit. Accordingly, the processing unit of the computing unit may not need to be involved when transferring the second part of the control instructions. The second part of the control instructions may thus directly be transferred into the working memory by the DMA controller, e.g. via a Southbridge or a system controller hub of the computing unit. The transfer can thus be performed fast and efficiently without the need to involve the processing unit.

The boot control unit may comprise a field-programmable gate array (FPGA) or an application-specific integrated circuit (ASIC). With both the implementation of the boot control unit as a FPGA or as an ASIC, a fast transfer of the control instructions from the boot memory to the computing unit via said first and said second interface can be achieved. The boot control unit may perform a bitwise transfer of the control instructions, using no buffer or only a small buffer.

The first interface may be a low pin count (LPC) bus. The second interface may be a peripheral component interconnect express (PCIe) bus. The third interface between the boot memory and the boot control unit may be a parallel bus, e.g. an eight bit parallel bus. As only a smaller part of the control instructions is transferred via the relatively slow LPC bus, and the larger part of the control instructions is transferred via the fast PCIe bus, the performance of the initial program load can be improved significantly.

The first part of the control information may comprise control instructions for initializing the second interface. The boot control unit can be configured to transfer the second part of the control instructions after initialization of the second interface. As an example, the boot control unit may transfer the first part of the control instructions by the LPC bus, which is directly available when the computing device is powered up, in response to which the computing unit initializes the PCIe bus. After the transfer of the first part and the initialization the second part of the control instructions is then transferred by the fast PCIe bus.

The computing unit may further comprise a system controller hub (SHC) which provides the first and the second interface and which interfaces the working memory. Via the SHC the boot control unit can thus directly transfer the second part of the control instructions into the working memory. The SHC may for example be a Poulsbo or Poulsbo XL system controller hub produced by Intel®.

The boot memory may comprise a flash memory. It may be a flash memory of a relatively small size (e.g. between 4 and 32 MB), such as about 8 MB or about 16 MB, yet the boot memory may also be part of a larger memory, such as a hard drive or a memory card. The computing unit may comprise an Intel® Menlow or Menlow XL platform being provided with the system controller hub mentioned above. The processing unit may be an X86 compatible microprocessor. In particular, an Intel® Atom™ microprocessor may be used.

According to another aspect of the invention, a method of operating a computing device is provided, the computing device comprising a computing unit with a working memory and a processing unit, a boot memory comprising control instructions for operating the computing device which are to be transferred to the computing unit at start-up of the computing device, and a boot control unit interfacing the computing unit by at least a first and a second interface at interfacing the boot memory by a third interface. The method comprises the steps of retrieving the control instructions from the boot memory by the boot control unit, transferring a first part of the control instructions via the first interface to the computing unit, and transferring a second part of the control instructions via the second interface to the computing unit.

The method can be performed at the start-up of the computing device, e.g. shortly after powering on the computing device. According to an embodiment, the control instructions are stored in a compressed format in the boot memory, and the method further comprises the step of decompressing the control instructions by the processing unit after the compressed control instructions are received at the computing unit.

The computing device being operated by said method may be configured as described above.

With the method of operating the computing device the control instructions can be transferred faster from the boot memory via said two interfaces to the computing unit, so that the start-up performance of the computing device is improved.

According to a second aspect of the present invention, a computing device comprising a computing unit with a system controller, a working memory, and a processing unit is provided, the system controller comprising a clock interface for receiving a clock signal, wherein the system controller is further configured to provide a received clock signal and a reset signal to the processing unit at start-up of the computing device. The processing unit is configured to use the provided clock signal for processing the reset signal. The computing device further comprises a system management controller (SMC) interfacing the clock interface of the system controller, wherein the system management controller is adapted to supply a clock signal to the system controller via the clock interface.

In conventional computing devices the clock signal is generally provided by a real-time clock (RTC), which comprises a quartz crystal oscillator running at 32 kHz and requiring a substantial amount of time for oscillation build-up. By supplying the clock signal of the system management controller to the computing unit, the time required for recognizing a reset signal and accordingly the time required for starting up the computing device can be reduced.

According to an embodiment, the computing device further comprises an electronic oscillator for generating the clock signal, the electronic oscillator being connected to the system management controller. The electronic oscillator may for example be a quartz crystal oscillator operating at a frequency substantially higher than the 32 kHz at which a conventional RTC oscillator is operated. Accordingly, the oscillation build-up occurs much faster, and the clock signal becomes available a short time after turning on the computing device, e.g. within 10 to 50 ms.

The electronic oscillator may comprise a quartz crystal oscillator and may generate the clock signal with a frequency above 1 MHz, wherein the system controller may be adapted to operate with a clock signal having a frequency below 1 MHz. The electronic oscillator may for example operate in a range between 1 MHz and 1 GHz, wherein the system controller may require a clock signal in a range between 10 and 100 kHz, e.g. 32.8 kHz.

The system management controller may comprise a frequency divider adapted to divide a frequency of the clock signal generated by the electronic oscillator, so as to adapt the frequency of the clock signal to a frequency required by the system controller. That way, a high frequency oscillator with a fast oscillation build-up can be used, while the system controller can still be provided with a clock signal of the correct frequency.

The system controller may be a system controller hub (SCH), such as the Poulsbo or Poulsbo XL system controller hub produced by Intel®. As mentioned above, the computing unit may comprise an Intel® Menlow or Menlow XL platform, and the processing unit may be an X86 compatible microprocessor. The SMC may be a small version of input/output (I/O) controller or an integrated combined chip including an I/O controller function, a power supply function and a system clock function.

The computing device according to the second aspect of the invention may further be configured as mentioned above with respect to the first aspect of the invention. In particular, it may comprise a boot control unit interfacing a boot memory and interfacing the computing unit via at least a first and a second interface for transferring control instructions stored in the boot memory partly via the first and via the second interface to the computing unit.

According to a further aspect of the invention, a method of operating a computing device comprising a computing unit, which comprises a system controller, a working memory and a processing unit is provided. The system controller comprises a clock interface for receiving a clock signal, and the computing device further comprises a system management controller (SMC) interfacing the clock interface of the system controller. The method comprises the steps of supplying a clock signal from the system management controller to the system controller via the clock interface at start-up of the computing device, providing, by the system controller, the received clock signal and a reset signal to the processing unit and, at the processing unit, using the provided clock signal for processing the reset signal.

The advantages outlined above with respect to the device according to the second aspect of the invention may also be achieved by this method. In particular, as the clock signal from the system management controller is available already a short time after powering on the computing device, the recognition of the reset signal at the system controller and the processing unit and the resetting of the reset signal can be performed faster.

According to an embodiment, the method further comprises generating the clock signal by an electronic oscillator or quartz connected to the system management controller and dividing a frequency of the clock signal generated by the electronic oscillator or quartz in said system management controller so as to adapt the frequency of the clock signal to a frequency required by the system controller.

The method may further comprise providing the reset signal from the system management controller to the system controller and deactivating the reset signal after the reset signal is being processed by the processing unit. As the deactivation of the reset signal may be performed faster by the above method, the time required for starting up the computing device can be reduced.

Furthermore, the computing device may be configured as described above with respect to the first and/or the second aspect of the invention. In particular, the computing device may further be configured as described above with respect to the first aspect of the invention, and the method may further comprise the steps of one of the methods described with respect to the first aspect of the invention. As an example, after performing the reset operating mentioned above, the method may further comprise the transferring of control instructions from a boot memory via a first and a second interface to the computing unit by means of a boot control unit. By a combination of these methods, the time required for starting up the computing device can further be reduced. The improvement in start-up performance may enable the computing device to meet the system start-up requirements of automotive applications.

The features of the above aspects and embodiments of the invention may be combined with each other unless noted to the contrary.

### Brief Description of the Drawings

The foregoing and other features and advantages of the invention will become further apparent from the following detailed description read in conjunction with the accompanying drawings. In the drawings like reference numerals refer to like elements.

Fig. 1 is a schematic block diagram illustrating a computing device according to an embodiment of the present invention.

Fig. 2 is a flow diagram illustrating a method according to an embodiment of the present invention.

Fig. 3 is a flow diagram illustrating an embodiment of a method according to the second aspect of the invention.

Fig. 4 is a flow diagram illustrating an embodiment of a method according to the first aspect of the invention.

### Detailed Description

It is to be understood that the following description of embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. The partitioning of embodiments in function blocks or units shown in the drawings is not to be construed as indicating that these units necessarily are implemented as physically separate units, but functional blocks or units shown or described may be implemented as separate units, circuits, chips or circuit elements, but one or more functional blocks or units may as well be implemented in a common circuit, chip, circuit element or unit.

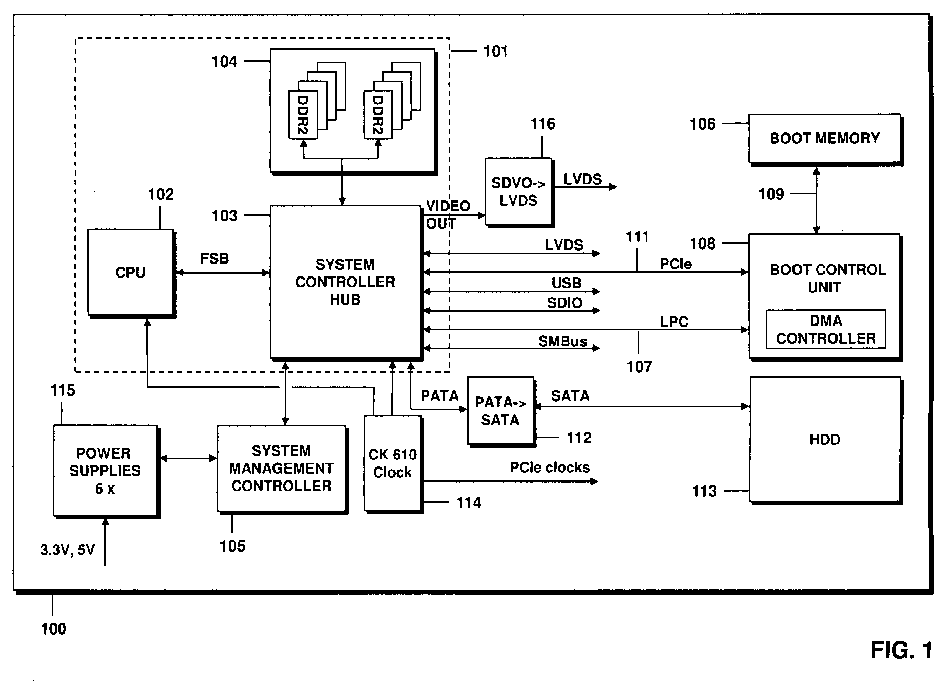

The schematic block diagram of Fig. 1 shows a computing device 100 which comprises a computing unit 101. Computing unit 101 comprises a central processing unit 102, a system controller hub 103 and a working memory 104. In the embodiment of Fig. 1, the computing device 100 is based on an Intel® Centrino® Atom™ platform, in particular on a Menlow or Menlow XL platform, and the system controller hub 103 is a Poulsbo or Poulsbo XL controller hub. CPU 102 is an Intel® Atom™ processor. It should be clear that other platforms comprising different processors and system controllers may also be used with the present invention. Memory 104 comprises plural double data rate 2 (DDR2) random access memory (RAM) modules, yet it may also comprise other types of memory.

Computing device 100 further comprises system management controller (SMC) 105. SMC 105 may control functions such as power flow and fan speed. In the present embodiment it is also used to signal a reset event to the computing unit 101. It may for example be signalled to the SCH 103 and other components of the platform requiring a reset signal. SMC 105 may comprise clock 114 and power supply 115 and may be implemented in one combined chip solution.

When starting the computing device 100, the first start-up phase is generally controlled by hardware. The phase comprises the recognition of the reset signal, which is controlled by the availability of a valid clock signal for the synchronous reset interface. Without the clock signal, the reset signal cannot be processed by computing unit 101.

In conventional systems, a real-time clock quartz is used for generating a clock signal at a frequency of e.g. 32.8 kHz, yet such a RTC quartz requires an oscillation build-up time of more than 800 ms. Such high oscillation build-up times are in particular encountered in automotive environments, where batteries may not be used for running the RTC quartz.

The present embodiment of Fig. 1 does not use a clock signal from a RTC quartz, but uses a clock signal from the SMC 105. SMC 105 may itself comprise a quartz oscillator, or may interface an oscillator external to SMC 105 (not shown in Fig. 1). The quartz oscillator connected to SMC 105 operates at a higher frequency than the RTC quartz, e.g. in the MHz range. As a result, the oscillation build-up time of the oscillator connected to SMC 105 is shorter than that of a RTC quartz, it may be as short as 10 to 20 ms. System management controller 105 comprises one or more frequency dividers which reduce the frequency of the clock signal. The SCH 103 may still require a clocking signal with a frequency of 32.768 kHz, which is the frequency generally produced by the crystal oscillator of a RTC. SMC 105 adapts the frequency of the clock signal to this frequency required by the SCH 103.

As the clock signal provided by SMC 105 to SCH 103 is available much earlier than the clock signal of a conventional RTC, SCH 103 can start processing the reset signal much earlier, and the time span to the deactivation of the reset signal can be significantly reduced. SCH 103 provides both the reset signal and the clock signal to CPU 102 at start-up. During the operation of computing device 100, SMC 105 continues to supply the clock signal to SCH 103.

As SMC 105 generates the reset signal, it needs to be supplied with the RTC clock signal in a conventional system. As in the present embodiment the SMC 105 generates the clock signal itself, such a feedback of the RTC clock signal to the SMC 105 is not required in the present embodiment.

After the start-up phase described above, a further initialization of computing device 100 may be performed according to any method known in the art. This may comprise an initialization of memory 104, and the like.

The start-up of computing device 100 further requires the loading of control instructions into computing unit 101. Such a boot code or boot application comprising these control instructions is stored in boot memory 106, which is implemented as a flash memory in the present embodiment. The loading of the boot code during the start-up of the computing device 100 may also be termed "initial program load" (IPL). In conventional computing devices, the loading process of the boot code is performed via the relatively slow low pin code (LPC) bus 107, which achieves a speed of approximately 2 MB per second and is directly connected to a flash memory unit with a LPC interface. The time required for loading the boot application is thus determined by the bandwidth of the LPC interface 107 in conventional systems.

In the embodiment of Fig. 1, a boot control unit 108 is provided, which interfaces the boot memory 106 via a parallel interface 109. This may for example be an 8 bit interface. The boot control unit 108 is a field-programmable gate array (FPGA) or an application-specific integrated circuit (ASIC). Both of these units can be configured for performing specified functions fast and efficiently. Boot control unit 108 can for example be configured so as to comprise a direct memory access (DMA) controller 110. Boot control unit 108 interfaces the SCH 103 via a LPC bus 107 and via a PCIe bus 111. The PCIe bus 111 provides a data transfer rate that is significantly higher than that of the LPC bus 107. Yet the PCIe interface 111 is generally not available at the start-up of the computing device 100, as it has to be initialized.

Boot control unit 108 thus accesses boot memory 106 and transfers a first part of the control instructions stored thereon via LPC bus 107 to SCH 103. These instructions are executed and initialize the PCIe interface 111. During this initial boot, e.g. 100-300 kB of boot code may be transferred to SCH 103. After the initial boot, the boot control unit 108 switches to the PCIe interface 111. Due to the much higher bandwidth of the connection between the boot memory 106, the boot control unit 108 and the SCH 103 via parallel interface 109 and PCIe interface 111, the remaining part of the boot code can be transferred at a much higher rate than possible via a standard LPC bus. As an example, when using a boot code with a size of 2 MB, the transfer is about 900 ms faster as compared to loading the data directly from the boot flash via a LPC bus. The boot data may also be loaded from other DMA-capable mass storage devices, such as a hard drive, a SD card or other types of memory cards, and the like, which may have latencies on the order of several hundreds of milliseconds. Compared to loading the data from a secure digital (SD) card via a LPC bus, the computing device of the present embodiment still achieves a 300 ms faster loading of the boot data from the boot flash 106.

As mentioned above, the boot control unit 108 may be implemented as an ASIC or a FPGA. Compared to the realization using a FPGA, which itself requires a certain time for initialization, the ASIC loading times are about 150-300 ms shorter.

All or part of the control instructions may be provided as a compressed boot image in boot memory 106. During the DMA-transfer of the boot image via PCIe 111 the central processing unit 102 may decompress the boot image data. The decompression can be performed relatively fast, so that shortly after the boot image is transferred to memory 104 the corresponding data is available in a decompressed format.

By providing the RTC clock signal required for the reset by the system management controller 105 and by transferring the boot application via both LPC bus 107 and PCIe bus 111, the computing device 100 of the present embodiment can achieve an improvement in start-up performance of about 500-1000 ms or even more. The time required for starting up computing device 100 can thus be halved. As a result, computing device 100 is capable of meeting the stringent requirements posed on computing devices for automotive applications.

It should be clear that in other embodiments SCH 103 may receive the clock signal from a standard RTC clock, while the control instructions required for booting device 100 are transferred as described above. In other embodiments, a standard boot procedure may be implemented, e.g. by transferring the boot application from the boot memory only via a LPC bus, while the clock signal is provided by the SMC 105 as described above. Such embodiments will also provide an improved start-up performance compared to conventional computing devices, yet the device of Fig. 1 will achieve an even better performance.

The computing device 100 may comprise further components that are common to conventional computing devices. Such components are known to the person skilled in the art and will thus not be described in greater detail here. Examples include a serial advanced technology attachment (SATA) interface 112 and a connected hard disk drive (HDD) 113, a clock 114 for generating further clock signals, and a power supply 115 supplying power to the computing device 100. Clock 114 may for example be used for providing a clock signal to CPU 102 and to PCIe components. Note that clock 114 provides a clock signal different from the clock signal required for processing the reset signal at start-up of the computing device 100. The clock signal supplied by SMC 105 and used when processing the reset signal may also be provided throughout the operation of computing device 100.

Further, a video output is provided and a converter 116 for converting the serial digital video out (SDVO) signal into a low voltage differential signal (LVDS). The signal may be supplied to a display. It should be clear that some of the components shown in Fig. 1 are optional, such as units 112-116 and the further LVDS, USB, SDIO and SM busses.

Computing device 100 may for example be implemented as a control unit for a vehicle. It may for example control light, sound or engine-related functions of the vehicle. Yet computing device 100 may also be implemented in other devices, such as portable computing devices, e.g. a portable computer, a smart phone, a mobile internet device, a personal digital assistance and the like. Other implementations will suggest themselves to those skilled in the art and the scope of the invention is not limited to the implementations mentioned above.

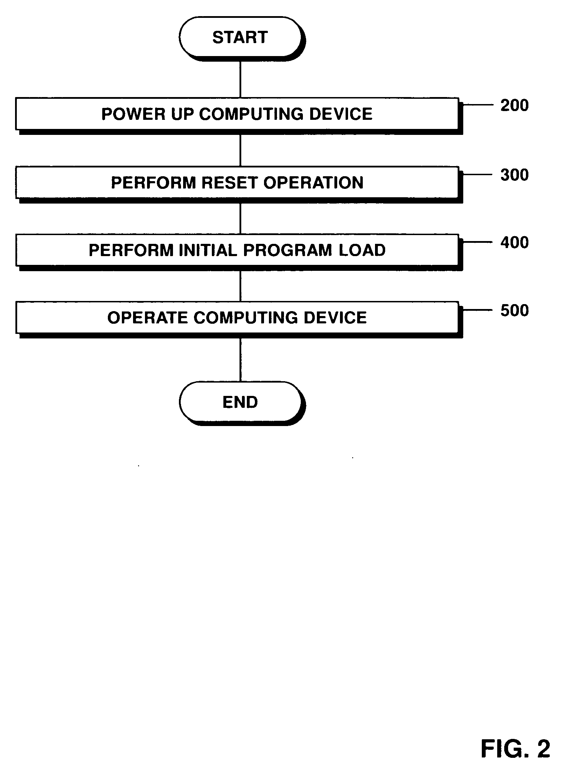

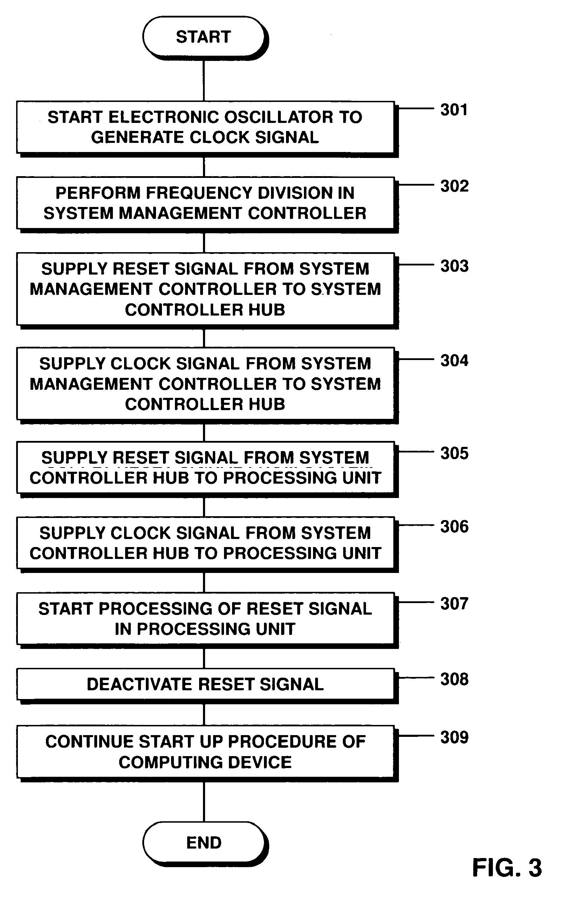

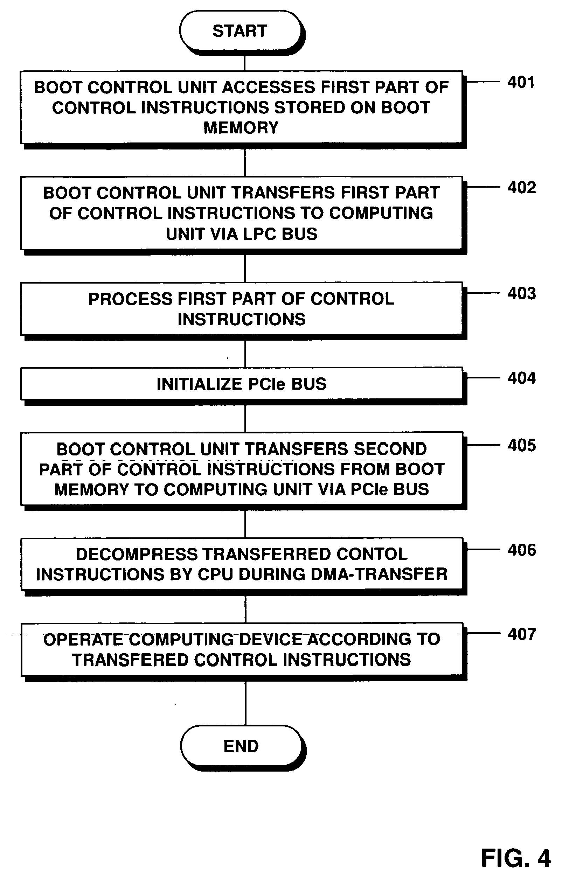

Fig. 2 shows a flow diagram of a method according to an embodiment of the invention. The method may be implemented on the computing device 100 shown in Fig. 1. The method comprises powering up the computing device (step 200) and performing a reset operation (step 300). The reset operation 300 is described in more detail further below with respect to Fig. 3. In step 400, an initial program load is performed. The initial program load is described in more detail further below with respect to Fig. 4. After these start-up operations, the computing device is operational and can be operated in step 500, in accordance with its specified functionality.

It should be clear that the start-up procedure shown in Fig. 2 can comprise further steps common to start-up procedures of computational devices. Such additional steps may comprise further initialization phases, such as initializing the chip set of the computing device, e.g. comprising northbridge and southbridge, performing a memory initialization and the like. Such procedures are known to the skilled person and will not be described in further detail here.

Fig. 3 shows a flow diagram of a method according to an embodiment of the second aspect of the present invention. In step 301, the electronic oscillator connected to the SMC 105 is started to generate a clock signal. In the SMC 105, a frequency division is performed to adapt the frequency of the clock signal to the frequency required by the SCH 103 (step 302). In step 303, a reset signal is supplied from the SMC 105 to the SCH 103. Further, the clock signal generated by frequency division in SMC 105 is supplied to the system controller hub 103 in step 304. SCH 103 supplies the reset signal (step 305) and the clock signal (step 306) to the processing unit 102. Note that the order of providing the reset signal and the clock signal to the SCH and to the processing unit may be different, e.g. reversed. These signals can be supplied asynchronously. The recognition of the reset generally occurs after a certain number of clock cycles. The recognition of the reset signal can thus occur synchronously. As the clock signal from SMC 105 is available shortly after powering up the computing device 100, the CPU 102 can start to process the reset signal with a very short delay (step 307).

The reset signal is then deactivated in step 308. Compared to systems which use a clock signal from a real-time clock for processing the reset signal, the reset signal can be deactivated several hundred microseconds earlier. After the reset signal is deactivated, the start-up procedure of the computing device 100 is continued (step 309).

Fig. 4 is a flow diagram of a method according to an embodiment of the first aspect of the present invention. In step 401, the boot control unit 108 accesses a first part of the control instructions stored on the boot memory 106. The boot control unit 108 transfers the first part of the control instructions to the computing unit 101 via the LPC bus 107. In the embodiment of Fig. 1, the instructions are transferred to the SCH 103, although it should be clear that other controllers or units may used for providing the LPC interface. The transfer may for example occur bitwise without the need to buffer larger parts of said control instructions in the boot control unit 108. The first part of the control instructions may for example comprise 100-300 kB of data. In step 403, the first part of the control instructions is processed, e.g. by SCH 103 and CPU 102. As a result of the processing, the PCIe bus 111 is initialized in step 104. After initialization of the PCIe bus, the transfer of the boot application is switched over to the PCIe bus. Accordingly, the boot control unit transfers a second part of the control instructions from the boot memory 106 to the computing unit 101 via the PCIe bus 111 (step 405). The transfer of the second part of the control instructions can be controlled by the DMA controller 110 and can occur directly (i.e. via SCH 103) into the memory 104 of computing unit 101. If the control instructions are stored in a compressed format in boot memory 106, the CPU 102 may decompress the data during the DMA transfer (step 406). As the decompression can be performed in parallel to the data transfer, the decompression results in a negligible delay. After the boot application is loaded into the memory 104, the computing device 100 can operate according to these control instructions (step 407). The control instructions may as such comprise a basic operating system of the computing device 100.

The methods described with respect to Figs. 3 and 4 may comprise further steps which are commonly performed during the system reset or during the loading of the boot application, respectively. The steps may also be performed in different orders or in parallel. For example, the generation and supplying of the clock signal to the SCH in step 304 and the supplying of the reset signal to the SCH in step 305 may be performed in parallel.

In summary, the present invention provides an improved start-up performance of a computing device. The improvements that can be achieved with the present invention are such that the computing device can be employed for automotive applications, as it is capable of meeting the requirements set for such environments.

While specific embodiments of the invention are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A computing device, comprising:
- a computing unit (101) comprising a working memory (104) and a processing unit (102),
- a boot memory (106) comprising control instructions for operating the computing device (100) which are to be transferred to the computing unit (101) at start-up of the computing device,
**characterized by** further comprising
- a boot control unit (108) interfacing the computing unit (101) by at least a first and a second interface and interfacing the boot memory (106) by a third interface,
wherein the boot control unit (108) is configured to transfer a first part of said control instructions from said boot memory (106) via said first interface to said computing unit (101) and to transfer a second part of said control instructions from said boot memory (106) via said second interface to said computing unit (101).

2. The computing device according to claim 1, wherein the second part of said control instructions is larger than said first part and wherein the second interface is configured to transfer data at a faster rate than said first interface.

3. The computing device according to claim 1 or 2, wherein the boot control unit (108) comprises a direct memory access controller (110) for transferring said second part of said control instructions via said second interface into the working memory (104) of said computing unit (101).

4. The computing device according to any of the preceding claims, wherein said boot control unit (108) comprises a field-programmable gate array or an application specific integrated circuit.

5. The computing device according to any of the preceding claims, wherein said first interface is a low pin count bus (107) and said second interface is a peripheral component interconnect express bus (111).

6. The computing device according to any of the preceding claims, wherein said computing unit (101) comprises a system controller hub (103) which provides said first and said second interface and which interfaces said working memory (104).

7. The computing device according to claim 6, wherein said boot memory (106) comprises a flash memory, said computing unit (101) comprises an Intel Menlow platform with said system controller hub (103) and said processing unit (102) is an x86 compatible microprocessor.

8. The computing device according to any of the preceding claims, wherein said first part of said control instructions comprises control instructions for initializing said second interface, the boot control unit (108) being configured to transfer said second part of said control instruction after initialization of the second interface.

9. A method of operating a computing device, the computing device comprising a computing unit (101) comprising a working memory (104) and a processing unit (102), a boot memory (106) comprising control instructions for operating the computing device (100) which are to be transferred to the computing unit (101) at start-up of the computing device, and a boot control unit (108) interfacing the computing unit (101) by at least a first and a second interface and interfacing the boot memory (106) by a third interface, the method comprising the steps of:
- retrieving said control instructions from said boot memory (106) by said boot control unit (108),
- transferring a first part of said control instructions via said first interface to said computing unit (101), and
- transferring a second part of said control instructions via said second interface to said computing unit (101).

10. The method of claim 9, wherein said control instructions are stored in a compressed format in said boot memory (106), the method further comprising:
- decompressing the control instructions by said processing unit (102) after said compressed control instructions are received at said computing unit (101).

11. The method according to claim 9 or 10, wherein the computing device is configured according to any of claims 1-8.

12. A computing device, comprising:
- a computing unit (101) comprising a system controller (103), a working memory (104) and a processing unit (102), the system controller (103) comprising a clock interface for receiving a clock signal, the system controller (103) being further configured to provide a received clock signal and a reset signal to the processing unit (102) at start-up of the computing device (100), the processing unit (102) being configured to use the provided clock signal for processing the reset signal,
**characterized by** further comprising
- a system management controller (105) interfacing said clock interface of said system controller (103), wherein the system management controller (105) is adapted to supply a clock signal to said system controller (103) via said clock interface.

13. The computing device according to claim 12, further comprising an electronic oscillator for generating said clock signal, the electronic oscillator being connected to said system management controller (105).

14. The computing device according to claim 13, wherein the electronic oscillator comprises a quartz crystal oscillator and generates the clock signal with a frequency above 1 MHz, the system controller (103) being adapted to operate with a clock signal having a frequency below 1 MHz.

15. The computing device according to claim 13 or 14, wherein the system management controller (105) comprises a frequency divider adapted to divide a frequency of the clock signal generated by said electronic oscillator so as to adapt the frequency of the clock signal to a frequency required by said system controller (103).

16. The computing device according to any of claims 12 to 15, wherein the system controller is a system controller hub (103), wherein the computing unit (101) comprises an Intel Menlow platform, and wherein the processing unit (102) is an x86 compatible microprocessor.

17. The computing device according to any of claims 12 to 15, wherein the computing device is further configured according to any of claims 1 to 8.

18. A method of operating a computing device comprising a computing unit (101) comprising a system controller (103), a working memory (104) and a processing unit (102), the system controller (103) comprising a clock interface for receiving a clock signal, the computing device (100) further comprising a system management controller (105) interfacing said clock interface of said system controller (103), the method comprising the steps of:
- supplying a clock signal from said system management controller (105) to said system controller (103) via said clock interface at startup of the computing device (100),
- providing, by the system controller (103), the received clock signal and a reset signal to the processing unit (102), and
- at the processing unit (102), using the provided clock signal for processing the reset signal.

19. The method according to claim 18, further comprising:
- generating said clock signal by an electronic oscillator or quartz connected to said system management controller (105), and
- dividing a frequency of the clock signal generated by the electronic oscillator or quartz in said system management controller (105) so as to adapt the frequency of the clock signal to a frequency required by said system controller (103).

20. The method according to claim 18 or 19, further comprising:
- providing said reset signal from the system management controller (105) to the system controller (103), and
- deactivating the reset signal after the reset signal is being processed by said processing unit (102).

21. The method according to any of claims 18-20, wherein the computing device is configured according to any of claims 12 to 17.

## Amended claims

### Amended claims in accordance with Rule 137(2) EPC.

**1.** A computing device, comprising:
- a computing unit (101) comprising a working memory (104) and a processing unit (102),
- a boot memory (106) comprising control instructions for operating the computing device (100) which are to be transferred to the computing unit (101) at start-up of the computing device,
- a boot control unit (108) interfacing the computing unit (101) by at least a first and a second interface and interfacing the boot memory (106) by a third interface,
wherein the boot control unit (108) is configured to transfer a first part of said control instructions from said boot memory (106) via said first interface to said computing unit (101) and to transfer a second part of said control instructions from said boot memory (106) via said second interface to said computing unit (101), wherein the second part of said control instructions is larger than said first part and wherein the second interface is configured to transfer data at a faster rate than said first interface, and
wherein said first part of said control instructions comprises control instructions for initializing said second interface, the boot control unit (108) being configured to transfer said second part of said control instruction after initialization of the second interface.

**2.** The computing device according to claim 1, wherein the boot control unit (108) comprises a direct memory access controller (110) for transferring said second part of said control instructions via said second interface into the working memory (104) of said computing unit (101).

**3.** The computing device according to any of the preceding claims, wherein said boot control unit (108) comprises a field-programmable gate array or an application specific integrated circuit.

**4.** The computing device according to any of the preceding claims, wherein said first interface is a low pin count bus (107) and said second interface is a peripheral component interconnect express bus (111).

**5.** The computing device according to any of the preceding claims, wherein said computing unit (101) comprises a system controller hub (103) which provides said first and said second interface and which interfaces said working memory (104).

**6.** The computing device according to claim 5, wherein said boot memory (106) comprises a flash memory, said computing unit (101) comprises an Intel Menlow platform with said system controller hub (103) and said processing unit (102) is an x86 compatible microprocessor.

**7.** The computing device according to any of the preceding claims, wherein the computing unit (101) further comprises a system controller (103), the system controller (103) comprising a clock interface for receiving a clock signal, the system controller (103) being further configured to provide a received clock signal and a reset signal to the processing unit (102) at start-up of the computing device (100), the processing unit (102) being configured to use the provided clock signal for processing the reset signal,
and wherein the computing device further comprises a system management controller (105) interfacing said clock interface of said system controller (103), wherein the system management controller (105) is adapted to supply a clock signal to said system controller (103) via said clock interface.

**8.** The computing device according to claim 7, further comprising an electronic oscillator for generating said clock signal, the electronic oscillator being connected to said system management controller (105).

**9.** The computing device according to claim 8, wherein the electronic oscillator comprises a quartz crystal oscillator and generates the clock signal with a frequency above 1 MHz, the system controller (103) being adapted to operate with a clock signal having a frequency below MHz.

**10.** The computing device according to claim 8 or 9, wherein the system management controller (105) comprises a frequency divider adapted to divide a frequency of the clock signal generated by said electronic oscillator so as to adapt the frequency of the clock signal to a frequency required by said system controller (103).

**11.** The computing device according to any of claims 7 to 10, wherein the system controller is a system controller hub (103), wherein the computing unit (101) comprises an Intel Menlow platform, and wherein the processing unit (102) is an x86 compatible microprocessor.

**12.** A method of operating a computing device, the computing device comprising a computing unit (101) comprising a working memory (104) and a processing unit (102), a boot memory (106) comprising control instructions for operating the computing device (100) which are to be transferred to the computing unit (101) at start-up of the computing device, and a boot control unit (108) interfacing the computing unit (101) by at least a first and a second interface and interfacing the boot memory (106) by a third interface, the method comprising the steps of:
- retrieving said control instructions from said boot memory (106) by said boot control unit (108),
- transferring a first part of said control instructions via said first interface to said computing unit (101), and
- transferring a second part of said control instructions via said second interface to said computing unit (101),
wherein the second part of said control instructions is larger than said first part and wherein the second interface is configured to transfer data at a faster rate than said first interface, and
wherein said first part of said control instructions comprises control instructions for initializing said second interface, the boot control unit (108) being configured to transfer said second part of said control instruction after initialization of the second interface.

**13.** The method of claim 12, wherein said control instructions are stored in a compressed format in said boot memory (106), the method further comprising:
- decompressing the control instructions by said processing unit (102) after said compressed control instructions are received at said computing unit (101).

**14.** The method according to claim 12 or 13, wherein the computing device is configured according to any of claims 1-6.

**15.** The method according to any of claims 12-14, wherein the computing unit (101) further comprises a system controller (103), the system controller (103) comprising a clock interface for receiving a clock signal, the computing device (100) further comprising a system management controller (105) interfacing said clock interface of said system controller (103), the method further comprising the steps of:
- supplying a clock signal from said system management controller (105) to said system controller (103) via said clock interface at startup of the computing device (100),
- providing, by the system controller (103), the received clock signal and a reset signal to the processing unit (102), and
- at the processing unit (102), using the provided clock signal for processing the reset signal.

**16.** The method according to claim 15, further comprising:
- generating said clock signal by an electronic oscillator or quartz connected to said system management controller (105), and
- dividing a frequency of the clock signal generated by the electronic oscillator or quartz in said system management controller (105) so as to adapt the frequency of the clock signal to a frequency required by said system controller (103).

**17.** The method according to claim 15 or 16, further comprising:
- providing said reset signal from the system management controller (105) to the system controller (103), and
- deactivating the reset signal after the reset signal is being processed by said processing unit (102).

**18.** The method according to any of claims 15-17, wherein the computing device is configured according to any of claims 7 to 11.
